# EUROPÄISCHE PATENTSCHRIFT

(11) **EP 2 297 674 B1**
(45) Veröffentlichungstag und Bekanntmachung des Hinweises auf die Patenterteilung: **21.01.2015**
(21) Anmeldenummer: 09761583.5
(22) Anmeldetag: 20.05.2009
(51) Int. Cl.: G06K 9/00, G06K 9/36

(54) **OPTISCHE ERFASSUNG UND KLASSIFIZIERUNG VON GEGENSTÄNDLICHEN LEERGUT-OBJEKTEN IN EINEM LEERGUT-RÜCKGABESYSTEM**
OPTICAL DETECTION AND CLASSIFICATION OF EMPTY OBJECTS IN A SYSTEM FOR RETURNING EMPTIES
DÉTECTION OPTIQUE ET CLASSIFICATION D'OBJETS EMBALLAGES CONSIGNÉS FIGURATIFS DANS UN SYSTÈME DE RETOUR D'EMBALLAGES CONSIGNÉS

(30) Priorität: 28.05.2008 DE 102008025658
(43) Veröffentlichungstag der Anmeldung: 23.03.2011
(73) Patentinhaber: Wincor Nixdorf International GmbH, 33106 Paderborn (DE)
(72) Erfinder: ROEDER, Thomas, 33106 Paderborn (DE); MASCHOTTA, Ralph, 33106 Paderborn (DE); DUELLI, Markus, 33106 Paderborn (DE)
(86) Internationale Anmeldenummer: PCT/EP2009/056152
(87) Internationale Veröffentlichungsnummer: WO 2009/150020

(56) Entgegenhaltungen:
- WO-A-02/058856
- WO-A-2006/045285
- DE-A1-102007 009 769
- US-A1- 2005 041 850
- ANDREW YOUNG ED: "Return Summer 2005" RETURN, [Online] 2005, Seiten 4-7, XP002546115 Tomra Systems ASA, Asker, Norway Gefunden im Internet: URL:http://www.tomra.com/default.asp?V_ITE M_ID=433> [gefunden am 2009-09-14]
- TRAUTWEIN SB-TECHNIK: "uniCycle 20.10"[Online] XP002546116 Gefunden im Internet: URL:http://www.trautwein-sb.de/> [gefunden am 2009-09-14]

## Beschreibung

Die Erfindung betrifft ein Verfahren zur optischen Erfassung und zum Klassifizieren von gegenständlichen Leergut-Objekten, in Form von Kästen oder Kisten, in einem Leergut-Rückgabesystem sowie ein nach dem Verfahren arbeitendes Leergut-Rückgabesystem, insbesondere einen Leergut-Rückgabeautomat für Getränkekästen.

Viele der im Handel verwendeten Gebinde bzw. Behältnisse, insbesondere Getränkekästen, sind in einen Recycling-Kreislauf eingebunden und müssen bei der Rückgabe durch den Kunden als Leergut-Objekte erkannt und klassifiziert werden, um sichere Daten für die Warenwirtschaft zu erhalten (Bestandaufnahme des Warensortiments, Rücktransport zur erneuten Befüllung etc.). Insbesondere im Bereich der Getränkekästen hat sich eine Vielfalt an unterschiedlichen Designs und Beschriftungen herausgebildet, die eine Unterscheidung und Klassifizierung bei der Leergut-Annahme erschweren. Auch aus Kostengründen werden zunehmend Leergut - Rückgabesysteme eingesetzt, die das Leergut automatisch erkennen und klassifizieren sollen.

Beispielsweise müssen die verschiedenen Getränkekästen für Bier, Mineralwasser bzw. Sprudel oder für Saft voneinander unterschieden werden. Dann müssen die einzelnen Kästen, z.B. die Bierkästen anhand der verschiedenen Brauereilogos, nach ihrer Herkunft unterschieden werden usw., um zu entscheiden, ob der jeweilige Bierkasten zum Warensortiment des Verkaufsmarktes (z.B. Supermarkt, Getränkemarkt) gehören.

Aus der WO 2006 / 045285 A1 sind ein Verfahren und eine Einrichtung zur dreidimensionalen Vermessung von Objekten wie Behältern, insbesondere Getränke- bzw. Flaschenkästen bekannt. Es erfolgt eine Stereoabbildung des Objektes durch zwei Kameras, die oberhalb des Objektes angeordnet sind und einen im Wesentlichen achsenparallelen Strahlengang aufweisen. Zur Beleuchtung des Objektes ist eine im Wesentlichen ringförmige Lichtquelle vorgesehen, die zwischen dem Objekt und den Kameras angeordnet ist und eine Beleuchtung des Objektes ermöglicht. Das Verfahren ist zur optischen Erfassung und zum Klassifizieren von gegenständlichen Leergut-Objekten in einem Leergut-Rückgabesystem geeignet, wobei das jeweilige Leergut-Objekt mindestens ein optisches Objektmerkmal (Schriftzüge, Logos usw.) aufweist und in einen Messraum des Leergut-Rückgabesystems eingebracht wird. Mittels mindestens einer ersten Kamera werden Quellbilddaten des optischen Objektmerkmals erfasst. Mittels mindestens einer optischen Sensorik, insbesondere einer zweiten Kamera, werden geometrische Parameter des Leergut-Objekts erfasst, um das optische Objektmerkmal zu erkennen und das jeweilige Leergut-Objekt zu erfassen und zu klassifizieren. Durch die jeweilige Positionierung des Leergut-Objects können in den Kamerabildern räumliche Verzerrung und schwankende bzw. variable Beleuchtungszustände auftreten, welche die optische Erkennung der Objektmerkmal und Klassifizierung erschweren.

Diese Probleme treten auch bei den Verfahren und Vorrichtungen auf, die aus WO 2002 / 058856 A1 bekannt sind.

Aus der US 2005/041850 A1 ist eine optische Inspektions-Einrichtung mit einer Kamera bekannt, die Bildaufnahmen von Halbleitermaterial, sog. Wafern, erzeugt. In einer Recheneinheit (controller) warden eine Weißbildkorrektur (flat field correction) sowie geometrische Korrekturen durchgeführt.

Es ist Aufgabe der Erfindung, ein Verfahren und ein danach arbeitendes Leergut-Rückgabesystem vorzuschlagen, bei dem Leergut-Objekte, in Form von Kästen oder Kisten, die jeweils ein bestimmtes optisches Objektmerkmal auf einer flachen Logo-Ebene, wie z.B. Logo und/oder Schriftzug, aufweisen, automatisch schnell und sicher erkannt und klassifiziert werden, wobei ein normalisiertes Bild des Objektmerkmals zu erwirken, so dass das Problem räumlicher Verzerrung und variabler Beleuchtung überwunden wird.

Gelöst wird die Aufgabe durch ein Verfahren mit den Merkmalen des Anspruchs 1 sowie durch ein Leergut-Rückgabesystem mit den Merkmalen des nebengeordneten Anspruchs.

Demnach wird vorgeschlagen, dass zur optischen Erfassung und zum Klassifizieren von gegenständlichen Leergut-Objekten in einem Leergut-Rückgabesystem, bei dem das jeweilige Leergut-Objekt mindestens ein optisches Objektmerkmal aufweist und in einen Messraum des Leergut-Rückgabesystem eingebracht wird, wie folgt vorgegangen wird:
- mittels mindestens einer ersten Kamera werden Quellbilddaten des optischen Objektmerkmals erfasst;
- mittels mindestens einer optischen Sensorik, die mindestens zwei zweite Kamera umfasst, werden geometrische Parameter des Leergut-Objekts erfasst;
- aus den Quellbilddaten werden mittels zuvor berechneter Daten eines Beleuchtungsmodells, welche für ein die geometrischen Parameter aufweisendes Kalibrierobjekt die in dem Messraum auf die erste Kamera wirkende Beleuchtung wiedergeben, korrigierte Bilddaten berechnet, um das optische Objektmerkmal zu erkennen und anhand dessen das des jeweiligen Leergut-Objekts zu erfassen und zu klassifizieren.

Das erfindungsgemäße Leergut-Rückgabesystem ist entsprechend mit einem Messraum versehen, in dem mindestens eine erste Kamera angeordnet ist, die Quellbilddaten des optischen Objektmerkmals erfasst, und in dem mindestens eine optische Sensorik, die mindestens zwei zweite Kamera umfasst, angeordnet ist, die die geometrischen Parameter des Leergut-Objektes erfasst. Das Leergut-Rückgabesystem weist eine Recheneinheit auf, die aus den Quellbilddaten mittels zuvor berechneter Daten eines Beleuchtungsmodells, korrigierte Bilddaten berechnet, um das optische Objektmerkmal zu erkennen und anhand dessen das jeweilige Logo zu erfassen und zu klassifizieren. Dabei gibt das Beleuchtungsmodell für ein die geometrischen Parameter aufweisendes Kalibrierobjekt die in dem Messraum herrschende Beleuchtungssituation wieder.

Durch die erfindungsgemäßen Maßnahmen wird eine deutlich verbesserte Aufnahme von Bilddaten erreicht, die insbesondere von unerwünschten Artefakten befreit ist, welche aufgrund der Beleuchtung in Form von inhomogener Bildausleuchtung und/oder Reflexionen auftreten können. Das hierzu verwendete Beleuchtungsmodell entspricht einem virtuellen Abbild der Beleuchtung im Messraum und wird genutzt, um das von der ersten Kamera erfasste Logobild zu korrigieren. Dabei wird berücksichtigt, dass diese Korrektur abhängig von der mittels zweiter Kameras erfassten Geometrie ist, die sich insbesondere auf eine durch 3D-Messung ermittelte Position und ebenfalls ermittelte Ausrichtung (Winkel etc.) des Leergut-Objektes bezieht.

Vorteilhafte Ausgestaltungen ergeben sich aus den Unteransprüchen.

Demnach können geometrische Parameter berücksichtigt werden, die die Länge, Breite, Höhe des Leergut-Objekts und/oder seine Position im Messraum angeben, wobei das Beleuchtungsmodell Beleuchtungsdaten umfasst, die insbesondere für ein farbloses, vorzugsweise helles Modelobjekt gelten, um eine durch inhomogene Ausleuchtung des Messraums und/oder Reflexion auftretende Beeinflussung der Quellbilddaten zu korrigieren. Das Modelobjekt kann z.B. eine helle homogene Platte sein, die zumindest so groß ist, dass sie alle Bildbereiche abdeckt.

Zusätzlich kann auch mittels der geometrischen Parameter eine durch räumliche Verzerrung auftretende Beeinflussung der Quellbilddaten korrigiert werden. Zudem kann auch noch mittels optischer Parameter für die erste Kamera eine z.B. durch Linsenverzerrung der Kameraoptik auftretende Beeinflussung der Quellbilddaten korrigiert werden. Beide Entzerrungs-Maßnahmen können in einem Schritt durchgeführt werden, wobei mittels der optischen Parameter und der geometrischen Parameter die verzerrende Beeinflussung der Quellbilddaten gleichzeitig korrigiert wird.

Darüber hinaus kann auch mittels eines Farbmodells eine durch Materialschwankungen eines in der ersten Kamera implementierten lichtempfindlichen Halbleiterchips (z.B. CCD-Chip) auftretende Beeinflussung der Quellbilddaten und/oder der korrigierten Bilddaten korrigiert werden.

Insgesamt wird durch die Kombination dieser vielen Maßnahmen eine auf die jeweilige Geometrie und/oder Position des Leergut-Objektes optimal zugeschnittene Bildkorrektur erreicht.

Bei dem erfindungsgemäßen Verfahren können vorteilhafterweise die Quellbilddaten dadurch erfasst werden, dass mittels der ersten Kamera Mehrfach-Aufnahmen, insbesondere mit unterschiedlichen Verschlusszeiten, gemacht und anschließend miteinander kombiniert werden, um kombinierte Quellbilddaten zu erstellen, die eine höhere Bilddynamik als die Quellbilddaten aufweisen. In diesem Zusammenhang ist es vorteilhaft, wenn die Mehrfach-Aufnahmen durch eine pixelweise Überlagerung miteinander kombiniert werden. Dadurch entsteht ein pixelweise berechnetes Gesamtbild, bei dem jeder Pixel mit der auf seine Beleuchtung hin am besten eingestellten Kamera-Verschlusszeit (jeweilige Shutter-Stufe) erfasst ist. Beispielsweise werden Aufnahmen mit 4 verschieden Shutter-Stufen gemacht, die jeweils eine Auflösung von 8 Bit haben. Durch die pixelweise Überlagerung bzw. Kombination ergibt sich ein kombiniertes Bild mit einer Auflösung von 16 Bit.

Weiterhin können auch noch die Quellbilddaten oder die kombinierten Quellbilddaten einer Schwarzkorrektur unterzogen werden. Hierdurch werden insbesondere in dunklen Bildbereichen auftretende Reflexionsartefakte eliminiert.

Die Erfindung wird nachfolgend im Detail anhand von Ausführungsbeispielen beschrieben, wobei auf die beiliegenden schematischen Zeichnungen Bezug genommen wird, die folgendes darstellen:
- Fig. 1a-c: zeigen beispielhaft verschiedene Positionen, die ein Leergut-Objekt im Messraum eines Leergut-Rückgabesystems einnehmen kann;
- Fig. 2: zeigt den Aufbau eines erfindungsgemäßen Leergut-Rückgabesystems;
- Fig. 3: zeigt ein Strukturdiagramm für ein erfindungsgemäßes Verfahren; und
- Fig. 4: zeigt ein Ablaufdiagramm für das erfindungsgemäße Verfahren.

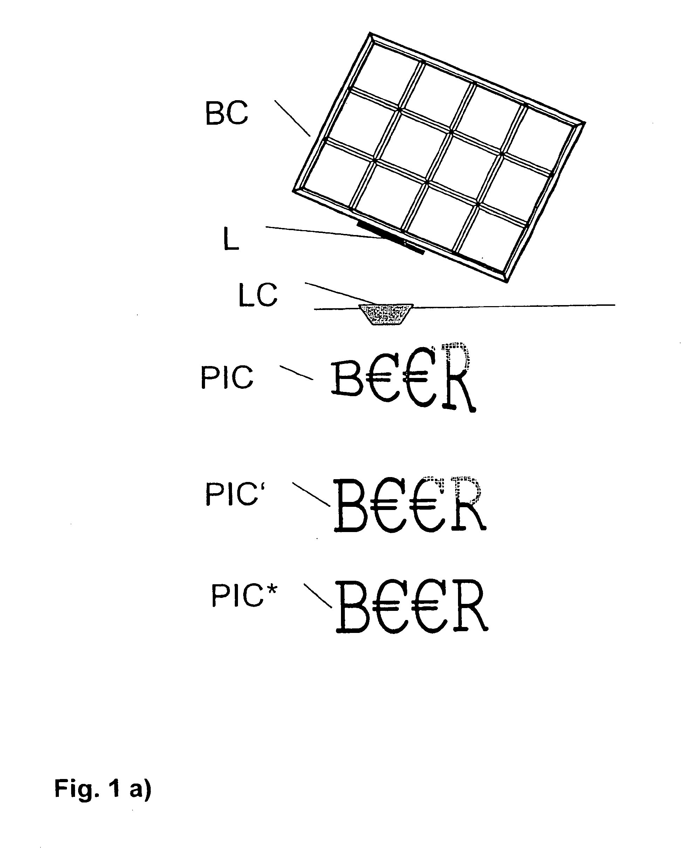

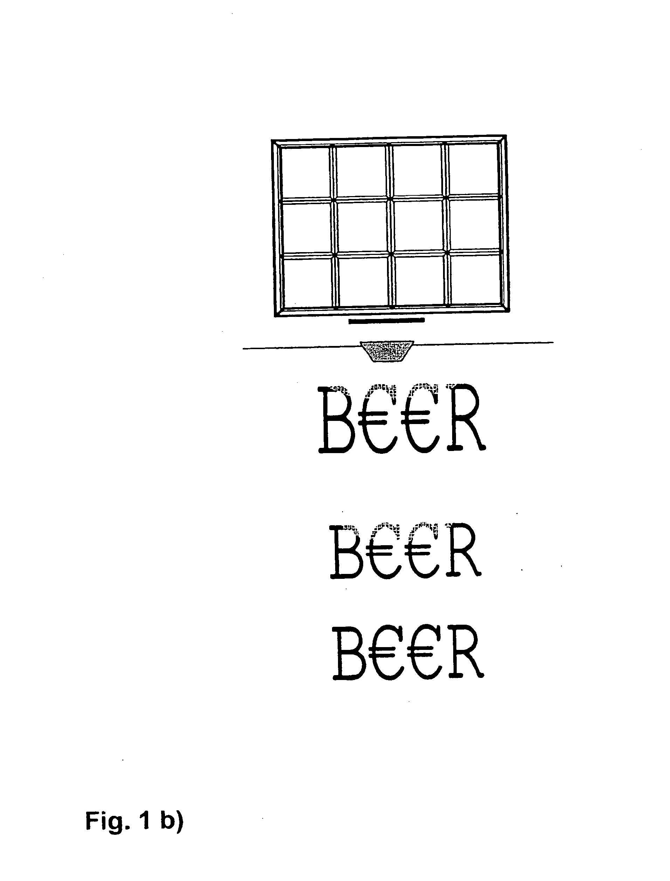

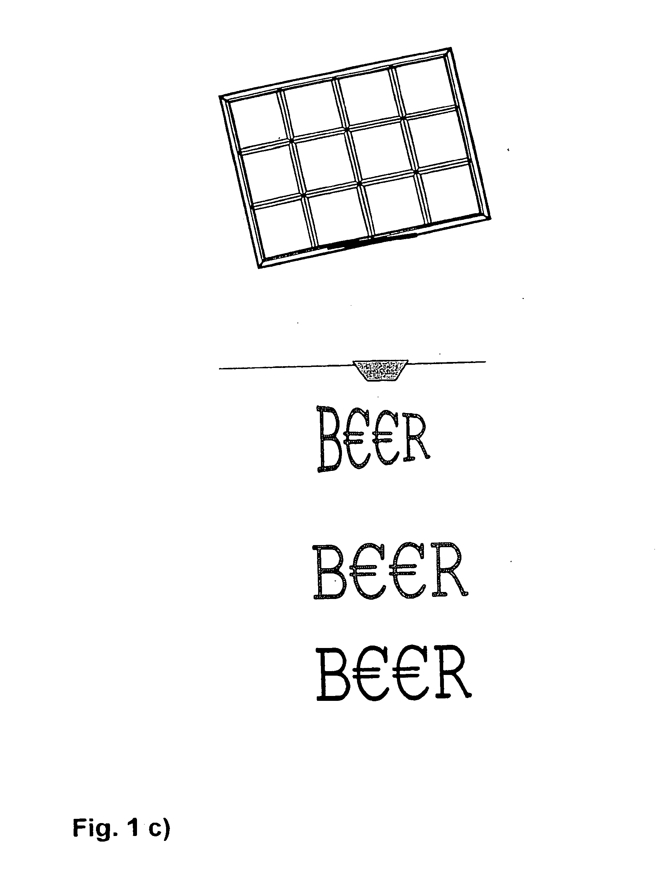

Die Fig. 1 verdeutlicht anhand von drei Teilfiguren a), b) und c) beispielhaft drei verschiedene Positionen, die ein Leergut-Objekt BC, hier ein Getränke- bzw. Bierkasten, im Messraum eines Leergut-Rückgabesystems einnehmen kann. Üblicherweise haben die Leergut-Rückgabesysteme eine größere Öffnung, damit die Kunden bei der Leergut-Rückgabe die unterschiedlichen Getränkekästen in den Messraum einbringen können, wobei dies üblicherweise durch ein Fließband geschieht, auf das der Kunde die jeweilige Getränkekiste abstellt. Mit dem Fließband wird dann die jeweilige Getränkekiste in den Messraum befördert, wo sie dann automatisch anhand eines optischen Objektmerkmal L, das hier dem jeweiligen Logo der Brauerei entspricht, erkannt und klassifiziert werden sollen. Durch die relativ große Öffnung kommt es häufig vor, dass die Kunden die Getränkekisten nicht optimal auf dem Fließband positionieren, so dass Getränkekisten im Messraum in unterschiedlichsten Positionen ankommen, was wiederum die optische Erfassung des Leergut-Objekts bzw. Getränkekastens BC mittels einer dort angebrachten ersten Kamera LC, der sog. Logokamera, erschwert.

Wie anhand der Fig. 1a) dargestellt wird, kann das Leergut-Objekt BC von dem Kunden beispielsweise schräg auf dem Fließband abgestellt worden sein. Die von der Logo-Kamera LC gemachte fotografische Aufnahme, die das Quellbild PIC für die spätere Bildverarbeitung darstellt, kann somit eine starke räumliche Verzerrung aufweisen, wie dies anhand der Fig. 1a) dargestellt wird. Zudem können aufgrund der inhomogenen Beleuchtung des Objektes BC Teilbereiche des Quellbildes PIC Reflexionen und/oder andere Störungen aufweisen.

Das erfindungsgemäße Verfahren ist nun in der Lage, aus dem Quellbild PIC schrittweise ein korrigiertes Bild PIC* zu erstellen bzw. zu berechnen, das weitestgehend von Störungen, insbesondere von Reflexionen und Verzerrungen befreit ist und somit für eine anschließende Bilderkennung besonders gut geeignet ist.

Die Fig. 1b) zeigt eine Situation, bei der der Bierkasten BC zwar gerade in den Messraum eingestellt worden ist, sich aber zu dicht an der Kamera LC befindet, so dass im oberen Bereich des Quellbildes PIC starke Reflexionen auftreten.

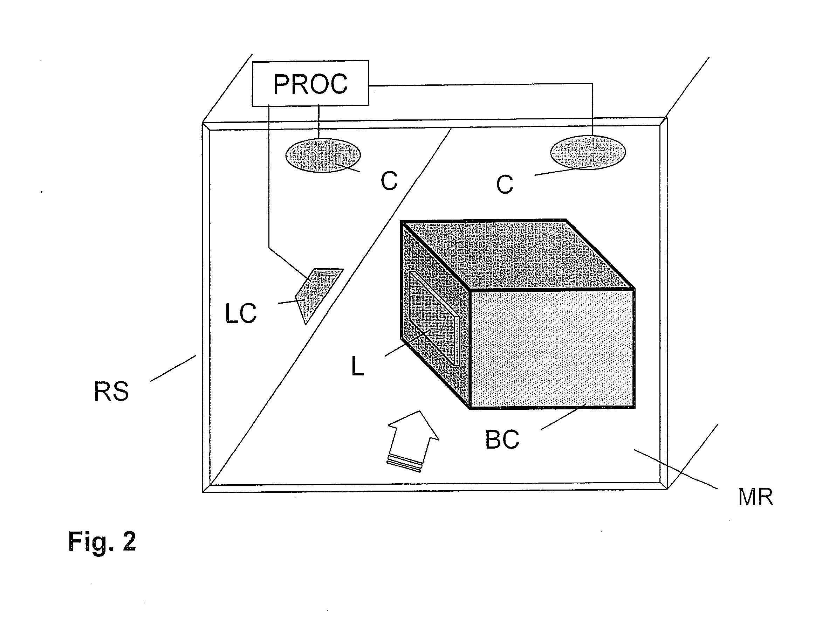

Die Fig. 2 zeigt eine Situation, bei der der Bierkasten BC in den Messraum mit einem größeren Abstand zur Kamera LC eingestellt worden ist, so dass zwar keine Reflexionen auftreten, dass aber der Abstand insgesamt zu groß ist und deshalb das Quellbild PIC eine zu schwache Ausleuchtung aufweist. Zudem ist der Bierkasten BC noch leicht schräg positioniert, wodurch das Quellbild PIC auch noch eine räumliche Verzerrung aufweist.

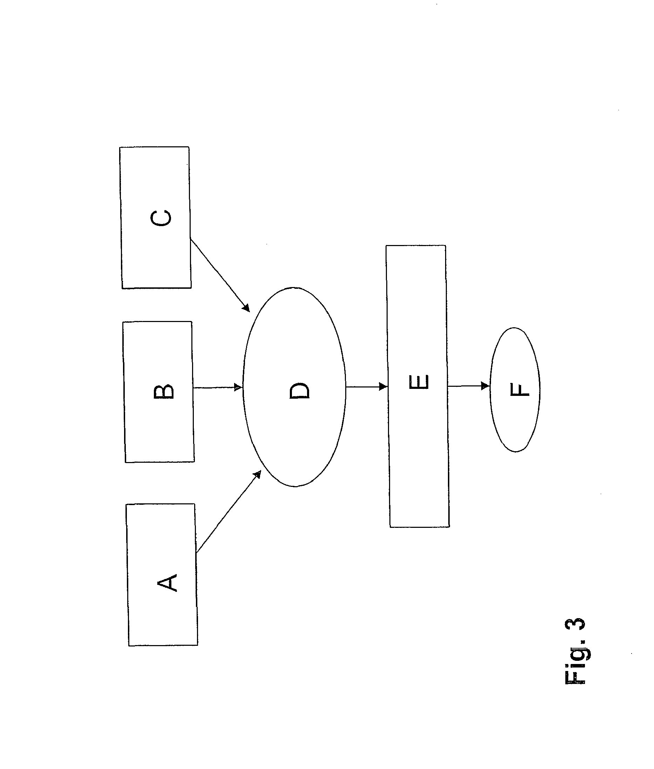

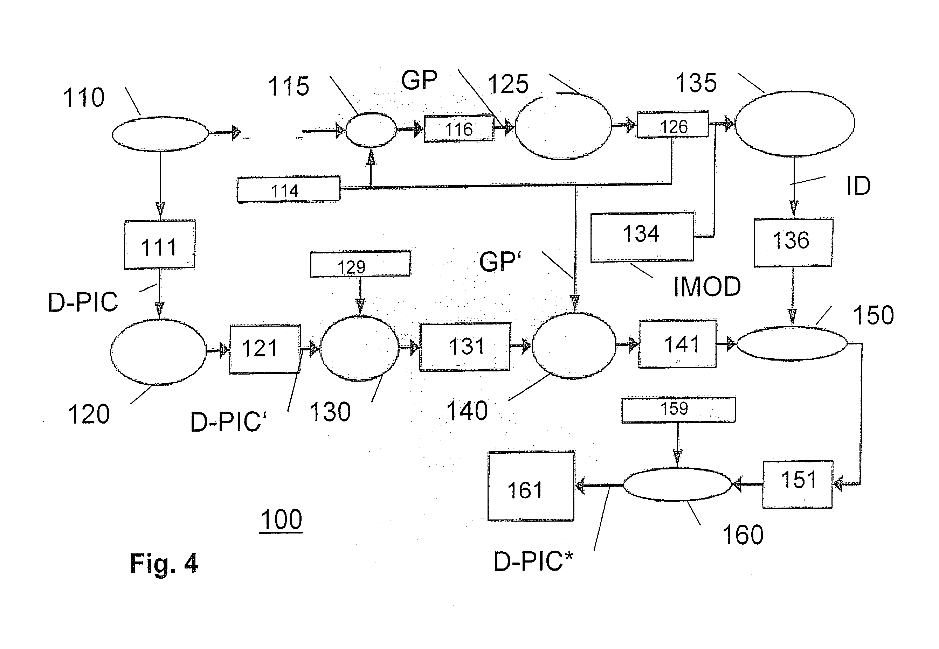

Mit Hilfe des später noch eingehend anhand der Fig. 3 und 4 beschriebenen Verfahrens werden die im Quellbild PIC auftretenden Störungen bzw. unerwünschten Artfakte eliminiert, um schließlich ein möglichst optimal korrigiertes Bild PIC* von dem Logo L zu erhalten. Dazu wird u.a. mit Hilfe von mindestens einer zweiten Kamera (s. C in Fig. 2) die aktuelle Geometrie und/oder des Objektes BC ermittelt und für eine Korrektur des Quellbildes PIC herangezogen, wobei insbesondere auf ein zuvor definiertes Beleuchtungsmodell zurück gegriffen wird, mit dem auch die inhomogene Beleuchtung für die jeweilige Geometrie bzw. Position optimal korrigiert werden kann.

Die Fig. 1a) bis 1c) zeigen also drei Situationen und die daraus resultierenden verzerrten und/oder durch Reflexionen gestörten Logobilder PIC (Quellbilder) sowie die entzerrten Logobilder PIC' und abschließend korrigierten Logobilder PIC*, wobei die Entzerrung und Korrektur auch in Abhängigkeit von der jeweiligen Position des Bierkastens BC erfolgt. Es ist deutlich zu erkennen, wie stark sich die Quellbilder PIC voneinander unterscheiden, so dass eine herkömmliche Logo-Erkennung und eine zuverlässige Klassifikation auf Grundlage solcher Quellbilder PIC sehr schwierig wäre. Das erfindungsgemäße Verfahren sowie das danach arbeitende Leergut-Rückgabesystems lösen dieses Problem in vorteilhafter Weise und berechnen aus dem jeweiligen Quellbild PIC ein optimal korrigiertes Bild PIC*.

Die Fig. 2 zeigt den prinzipiellen Aufbau eines Leergut-Rückgabesystems RS, das zur optischen Erfassung und zum Klassifizieren von in dem Messraum MR des Systems eingebrachten gegenständlichen Leergut-Objekten BC, die jeweils mindestens ein optisches Objektmerkmal L aufweisen, geeignet ist. Das System RS kann beispielsweise ein Leergut-Rückgabe-Automat sein, der in einem Supermarkt aufgestellt wird.

In dem Messraum MR des Systems RS sind neben der ersten Kamera LC, die das eigentliche Logo L aufnimmt, auch zweite Kameras C angeordnet, mit denen geometrische Parameter des eingebrachten Leergut-Objekts BC erfasst werden, um eine von der Geometrie und oder Position abhängige Bildaufbereitung des Quellbildes durchzuführen.

Dazu verfügt das Leergut-Rückgabesystem RS über eine Recheneinheit PROC, die Daten bzw. Signale von den Kameras empfängt. Von der ersten Kamera LC werden die eigentlichen Quellbilddaten D-PIC erzeugt und an die Recheneinheit PROC gesendet. Von den Kameras C werden Bilddaten für die Bestimmung der Geometrie bzw. Position des Objektes BC erzeugt, um daraus entsprechende geometrischen Parameter zu berechnen. Die Recheneinheit korrigiert dann die QuellbildDaten u.a: mittels eines Beleuchtungsmodells, das für ein die geometrischen Parameter aufweisendes Modellobjekt (nicht dargestellt) die in dem Messraum MR auf die erste Kamera LC wirkende Beleuchtung wiedergibt.

Anhand der Fig. 3 wird die Struktur des erfindungsgemäßen Verfahrens dargestellt:
Das Verfahren umfasst im wesentlichen die Bildkorrektur mittels eines Beleuchtungsmodells, ist aber bevorzugt darüber hinaus erweitert und nutzt drei Datenquellen A, B und C. Damit wird unter der Zielsetzung D durch eine Berechnung D ein entzerrtes und korrigiertes Logobild (s. PIC* in Fig. 2) erstellt, das für eine Klassifizierung F sehr gut geeignet ist.

Eine erste Datenquelle A besteht in den zuvor beschriebenen Kameras C (s. Fig. 1), die eine drei-dimensionale geometrische Vermessung und/oder Positionsbestimmung des Leergut-Objektes ermöglichen. Eine zweite Datenquelle besteht in der eigentlichen Logo-Kamera LC, die vorzugsweise Mehrfachaufnahmen mit verschiedenen Shutter-Stufen liefert, um ein kombiniertes Bild zu berechnen. Als weitere Datenquelle(n) C dienen vorgegebene bzw. aus dem Beleuchtungsmodell und aus einem Farbraummodell ermittelte Daten (Kalibrierungsparameter, Helligkeitsvolumen etc.), die für die Bild-Korrektur herangezogen werden.

Mittels dieser Quellen A, B, und C soll die Zielsetzung D erreicht werden, nämlich eine deutliche Verbesserung des aufgenommenen Logobildes, wobei insbesondere folgende Punkte erfüllt werden:
- Erweiterung des Dynamikumfangs
- Entfernung von Artefakten
- geometrische Entzerrung
- lage- bzw. positionsabhängige Helligkeits-, Kontrast- und Farbkorrektur

Das nachfolgend anhand der Fig. 4 beschriebene Verfahren erfüllt diese Zielsetzungen D für die Berechnung E eines korrigierten und entzerrten Logobildes, das dann für eine eindeutige und sichere Klassifizierung F verwendet werden kann.

Die Fig. 4 zeigt das Ablaufdiagramm für ein Verfahren 100, mit dem schrittweise (Schritte 110 bis 160) solche korrigierten und entzerrten Logobilder bzw. entsprechende Bilddaten D-PIC* berechnet werden.

In einem Schritt 110 beginnt das Verfahren mit der mehrfachen Aufnahme von Quellbildern, die durch die Bilddaten D-PIC repräsentiert werden, wobei hier z.B. vier Logobilder mit einer Auflösung von jeweils 8 Bit gemacht werden (Stufe 111). Durch eine pixelweise Kombination der vier Logobilder wird in einem Schritt 120 ein kombiniertes Logobild bzw. werden entsprechende Bilddaten D-PIC' mit einer deutlich höheren Dynamik berechnet. Das kombinierte Logobild weist dann z.B. eine Auflösung von 16 Bit auf (Stufe 121).

Anschließend erfolgt in einem Schritt 130 die Korrektur von Reflexionen, die in Dunkelbreichen des Bildes auftreten können. Hierzu werden Daten für Schwarzebenen (Stufe 129) herangezogen und ein schwarz-korrigiertes Bild (Stufe 134) berechnet.

Nun erfolgt in einem Schritt 140 eine geometrische Entzerrung des Bildes zu einem entzerrten Bild (Stufe 141). Dazu wird auf geometrische Parameter GP' zurück gegriffen, die zuvor wie folgt ermittelt worden sind:
In einem Schritt 115 wurde auf der Grundlage der von den zweiten Kameras C (s. Fig. 1) gemachten geometrischen Aufnahmen die Länge, Breite und Höhe des jeweiligen Objektes (z.B. Bierkasten BC in Fig. 1) vermessen, wobei auch Parameter für die Logo-Kamera LC berücksichtigt wurden (Stufe 114). Die ermittelten Daten geben auch die jeweilige Position des Objektes (Bierkasten BC) im Messraum an (Stufe 116), wobei die Daten als geometrische Parameter GP für eine im Schritt 125 durchgeführte Berechung der Logo-Ebene (Stufe 126) herangezogen werden. Damit ist die vertikale Ebene im Messraum gemeint, in der das aufgenommene Logo liegt. Die geometrischen Parameter GP bzw. die Angaben zur Logoebene werden zusammen mit den Kameraparametern (Stufe 114) als geometrische Parameter GP' bei der Berechnung zur geometrischen Entzerrung im Schritt 140 berücksichtigt. Somit erfolgt nicht nur eine Korrektur der räumlichen Verzerrung sondern auch eine Korrektur von evtl. in der Kameraoptik auftretenden Linsenverzerrung.

Das im Schritt 150 entzerrte Bild (Stufe 141) wird dann in einem Schritt 150 einer Weißkorrektur unterzogen. Hierzu werden zuvor berechnete Daten eines Beleuchtungsmodells IMOD herangezogen (Stufe 134), das für jede Logo-Ebene die Beleuchtungssituation im Messraum wiedergibt. Die Daten für das Beleuchtungsmodell IMOD wurden anhand eines vorzugsweise hellen Modell- oder Kalibrierobjekts erstellt und dienen als Weiß-Referenz-Volumen für die Berechnung eines Weißbildkorrektur-Bildes im Schritt 135. Das Weißbildkorrektur-Bild (Stufe 136) enthält also Weißkorrektur-Daten für die im Schritt 150 durchgeführte Weißkorrektur des entzerrten Bildes (Stufe 141). Die Weißkorrektur liefert ein weiß-korrigiertes Bild (Stufe 151), das von Beeinflussungen für die ermittelte Geometrie bzw. Position aufgrund der inhomogenen, insbesondere nicht-linearen, Beleuchtungssituation befreit ist.

In einem Schritt 160 wird schließlich noch eine Farbkorrektur mittels eines Farbraummodells bzw. einer Farbkorrelcturmatrix (Stufe 159) durchgeführt, um die Daten D-PIC* für ein möglichst optimal entzerrtes und korrigiertes Logobild (Stufe 161; s. auch PIC* in Fig. 1) zu erhalten.

Insgesamt kann die Erfindung also mit umfassenden Maßnahmen realisiert werden, die sich zusammenfassend wie folgt darstellen:
Wenn man als Ausgangspunkt von einem Verfahren und Leergut-Rückgabe-System zur Erkennung von Getränkekästen ausgeht, so wird neben einer drei-dimensionalen Vermessung der Kästen jeweils ein mehrfaches Logobild aufgenommen und insbesondere durch ein Beleuchtungsmodell korrigiert, um eine sichere Unterscheidung der Kästen zu ermöglichen. Im Rahmen der Produktentwicklung wurde erwiesen, dass sowohl die drei-dimensionale Vermessung des jeweiligen Kastens als auch die Logobildaufnahmen mit Hilfe industrieller Standard-Kameras durchgeführt werden können.

Die Logo-Kamera kann in ihrer Art und Position unterschiedlich zu den Kameras zur Objektvermessung sein, die hier auch als Positions-Kameras bezeichnet werden. Für die sichere Klassifikation der Objekte anhand lokaler Objektmerkmale ist der Ausgleich verschiedener auftretender Schwankungen, wie z.B. Schwankungen der Helligkeit, des Kontrastes oder auch der Farbvalenzen notwendig. Hierfür werden die oben beschriebenen Daten bzw. Informationen der Positions-Kameras und weitere im Vorfeld ermittelte Informationen (Beleuchtungsmodell, Linsenverzerrung, Farbraum etc.) kombiniert. Neben der eigentlichen Korrektur der geometrischen Verzerrungen werden auch die lageabhängigen Schwankungen kompensiert.

Erfindungsgemäß wird insbesondere ein Beleuchtungsmodell verwendet, d.h. ein Modell bzw. virtuelles Abbild der Beleuchtung im Messraum, mit dem das von der Logo-Kamera erfasste Logobild korrigiert wird. Diese Korrektur ist abhängig von der durch die 3D-Messung ermittelten Position und ebenfalls ermittelten Ausrichtung (Winkel) des Objektes.

Um darüber hinaus die Dynamik der Kamera, insbesondere die Helligkeitsdynamik, zu erweitern, fordert das System bei der Logo-Kamera mehrere Bilder mit unterschiedlicher Belichtungszeit bzw. Verschlusszeiten (sog. Shutterstufen) an und kombiniert diese mit Hilfe vorher bestimmter Kalibrierwerte. Das Objekt bzw. Logo wird virtuell mit Hilfe der ermittelten Position im Raum auf eine Normstellung gedreht und verschoben. Damit sind lokale Merkmale wie Farbe, Kanten etc. ermittelbar, was die Bestimmung des Logos detaillierter zulässt. Damit ist eine bessere Logoerkennung möglich. Es sind beliebig viele lokale und globale Merkmale ermittelbar, was nur durch die Auflösung der Kamera beschränkt ist. Durch die mehrfachen Aufnahmen bei unterschiedlichen Shutter-Stufen kann auch bei Verwendung einer einfachen Kamera eine hohe Dynamik erreicht werden.

Im Gesamten werden folgende Bearbeitungsschritte durchlaufen:
- Korrektur durch Beleuchtungsmodell (Weißkorrektur): Dazu wird ein konstantes virtuelles Abbild der Beleuchtung im Messraum erstellt. Mithilfe des so erstellten dreidimensionalen Helligkeitsvolumens wird das Logobild korrigiert. Diese Korrektur ist abhängig von der durch die 3D Messung ermittelten Position und der ebenfalls ermittelten Ausrichtung (Winkel) des Objektes.
- Einlesen unterschiedlicher Shutterbilder und Kombination der Bilder: Aufgrund der hohen Helligkeitsunterschiede zwischen den zu untersuchenden Objekten und den hohen Unterschieden der Helligkeit zwischen der vorderen und hinteren Objektposition, ist es aufgrund der zu geringen Dynamik der Logokamera kaum oder garnicht möglich, die Bilder mit einer konstanten Shutterstufe aufzunehmen. Um die Dynamik der Kamera zu erweitern, werden bei der Aufnahme des Logobildes automatisch mehrere Bilder unterschiedlicher Belichtungszeit aufgenommen. Hierfür wird eine eigens dafür bereitgestellte Schnittstelle der Logo-Kamera verwendet. Die aufgenommenen Bilder werden miteinander kombiniert und so der Wertebereich der Logobilder erhöht. Die hierfür nötigen Parameter werden vorher festgelegt.
- Entzerrung des Bildes auf Normposition (räumliche Entzerrung und Korrektur der Linsenverzerrung): Das Objekt wird virtuell mit Hilfe der ermittelten drei-dimensionalen Position im Raum auf eine Normstellung gedreht und verschoben. Darüber hinaus werden Verzeichnungen, die durch die Kameraoptik verursacht werden mit Hilfe vorher ermittelter Kalibrierparameter korrigiert.
- Farbkorrektur durch kalibrierte Werte (z.B. durch eine RGB-Korrekturmatrix)
- Schwarzkorrektur: Durch ein vorher aufgenommenes Schwarzbild, werden konstante Artefakte im Logobild korrigiert.
- Farbkorrektur durch kalibrierte Werte (z.B. durch eine RGB-Korrekturmatrix)

Mit Hilfe der Erfindung ist ein Ausgleich von Schwankungen der Helligkeit, des Kontrastes, der Farbvalenzen und der geometrischen Abbildung drei-dimensionaler Objekten in Bildern möglich, so dass eine deutlich verbesserte Klassifikation drei-dimensionaler Objekte erfolgen kann.

### Bezugszeichenliste

- RS: Leergut-Rückgabesystem
- MR: Messraum
- BC: Leergut-Objekt, hier Getränkekasten
- L: Objektmerkmal, hier Logo auf Getränkekasten
- LC: erste Kamera(s) für Aufnahme(n) des Logos
- C: optische Sensorik in Gestalt zweiter Kameras für Objektvermessung

- PROC: Recheneinheit

- PIC: Quellbild
- PIC': entzerrtes Bild
- PIC*: vollständig korrigiertes Bild

- D-PIC, D-PIC', D-PIC*: entsprechende Bilddaten

- IMOD: Beleuchtungsmodell
- ID: Beleuchtungsdaten (Korrekturdaten)

- GP, GP': geometrische Parameter

- A-F: Punkte des Strukturdiagramms für das Verfahren

- 100: Verfahren mit Schritten 110 bis 160

## Patentansprüche

1. Verfahren (100) zur optischen Erfassung und zum Klassifizieren von gegenständlichen Leergut-Objekten (BC), in Form von Kästen oder Kisten mit flacher Logo-Ebene, in einem Leergut-Rückgabesystem (RS), wobei das jeweilige Leergut-Objekt (BC) mindestens ein optisches Objektmerkmal (L) auf der Logo-Ebene aufweist und in einen Messraum (MR) des Leergut-Rückgabesystems (RS) eingebracht wird, wobei das Verfahren folgende Schritte aufweist:
- mittels mindestens einer ersten Kamera (LC) werden Quellbilddaten (D-PIC) des optischen Objektmerkmals (L) erfasst (110);
- mittels mindestens einer optischen Sensorik, die mindestens zwei zweite Kameras (C) umfasst, werden geometrische Parameter (GP) des Leergut-Objekts (BC) erfasst (115),
dadurch gekennziaichnet, dass
aus den Quellbilddaten (D-PIC) mittels zuvor berechneter Daten eines Beleuchtungsmodells (IMOD), welche für ein die geometrischen Parameter (GP) aufweisendes Kalibierobjekt die in dem Messraum (MR) auf die erste Kamera (LC) wirkende Beleuchtung wiedergeben, korrigierte Bilddaten (D-PIC*') berechnet (150) werden, um das optische Objektmerkmal (L) zu erkennen und anhand dessen das jeweilige Leergut-Objekts (BC) zu erfassen und zu klassifizieren.

2. Verfahren nach Anspruch 1, **dadurch gekennzeichnet, dass** die geometrischen Parameter (GP) die Länge, Breite, Höhe des Leergut-Objekts (BC) und/oder seine Position im Messraum (MR) angeben und dass das Beleuchtungsmodell (IMOD) Beleuchtungsdaten (ID) umfasst, die insbesondere für ein helles Kalibrierobjekt gelten, das zumindest näherungsweise dieselbe Länge, Breite, Höhe und/oder Position des Leergut-Objekts (BC) aufweist, um eine durch inhomogene Ausleuchtung des Messraums (MR) und/oder Reflexion auftretende Beeinflussung der Quellbilddaten (D-PIC) zu korrigieren (150).

3. Verfahren (100) nach Anspruch 1 oder 2, **dadurch gekennzeichnet, dass** mittels der geometrischen Parameter (GP) auch eine durch räumliche Verzerrung auftretende Beeinflussung der Quellbilddaten (D-PIC) korrigiert wird (140).

4. Verfahren (100) nach einem der Ansprüche 1 bis 3, **dadurch gekennzeichnet, dass** mittels optischer Parameter für die erste Kamera auch eine durch Linsenverzerrung der Kameraoptik auftretende Beeinflussung der Quellbilddaten (D-PIC) korrigiert wird (140).

5. Verfahren (100) nach Ansprüchen 3 und 4, **dadurch gekennzeichnet, dass** mittels optischer Parameter und der geometrischen Parameter (GP') die verzerrende Beeinflussung der Quellbilddaten (D-PIC) korrigiert wird (140).

6. Verfahren (100) nach einem der vorhergehenden Ansprüche, **dadurch gekennzeichnet, dass** mittels eines Farbmodells auch eine durch Materialschwankungen eines in der ersten Kamera (LC) implementierten lichtempfindlichen Halbleiterchips auftretende Beeinflussung der Quellbilddaten (D-PIC) und/oder der korrigierten Bilddaten (D-PIC*) korrigiert wird (160).

7. Verfahren (100) nach einem der vorhergehenden Ansprüche, **dadurch gekennzeichnet, dass** die Quellbilddaten (D-PIC) des optischen Objektmerkmals (L) erfasst werden (110), indem mittels der ersten Kamera (LC) Mehrfach-Aufnahmen, insbesondere mit unterschiedlichen Verschlusszeiten, gemacht und anschließend miteinander kombiniert werden (120), um kombinierte Quellbilddaten (D-PIC') zu erstellen, die eine höhere Bilddynamik als die Quellbilddaten (D-PIC) aufweisen.

8. Verfahren nach Anspruch 7, **dadurch gekennzeichnet, dass** die Mehrfach-Aufnahmen durch eine pixelweise Überlagerung miteinander kombiniert werden (120).

9. Verfahren nach einem der vorhergehenden Ansprüche, **dadurch gekennzeichnet, dass** die Quellbilddaten (D-PIC) oder die kombinierten Quellbilddaten (D-PIC') einer Schwarzkorrektur unterzogen werden.

10. Leergut-Rückgabesystem (RS) mit einem Messraum (MR) zur optischen Erfassung und zum Klassifizieren von in dem Messraum (MR) eingebrachten gegenständlichen Leergut-Objekten (BC), in Form von Kästen oder Kisten mit flacher Logo-Ebene, die jeweils mindestens ein optisches Objektmerkmal (L) auf der Logo-Ebene aufweisen, wobei in dem Messraum (RM):
- mindestens eine erste Kamera (LC) angeordnet ist, die Quellbilddaten (D-PIC) des optischen Objektmerkmals (L) erfasst;
- mindestens eine optische Sensorik, die mindestens zwei zweite Kameras (C) umfasst, angeordnet ist, die geometrische Parameter (GP) des Leergut-Objekts (BC) erfasst,
**dadurch gekennzeichnet,**
**dass** das Leergut-Rückgabesystem (RS) eine Recheneinheit (PROC) aufweist, die aus den Quellbilddaten (D-PIC) mittels zuvor berechneter Daten eines Beleuchtungsmodells (IMOD), welche für ein die geometrischen Parameter (GP) aufweisendes Kalibrierobjekt die in dem Messraum (MR) auf die erste Kamera (LC) wirkende Beleuchtung wiedergeben, korrigierte Bilddaten (D-PIC*) berechnet, um das optische Objektmerkmal (L) zu erkennen und anhand dessen das jeweilige Leergut-Objekt (BC) zu erfassen und zu klassifizieren.

## Claims

1. Method (100) for optically detecting and for classifying empty items (BC) constituting the subject matter, in the form of boxes or cases with a flat logo surface, in a system (RS) for returning empties, the respective empty item (BC) having at least one optical item feature (L) on the logo surface and being introduced into a measuring space (MR) of the system (RS) for returning empties, the method having the following steps:
- source image data (D-PIC) of the optical item feature (L) are detected (110) by means of at least one first camera (LC); and
- geometrical parameters (GP) of the empty item (BC) are detected (115) by means of at least one optical sensor system which comprises at least two second cameras (C),
**characterized in that** corrected image data (D-PIC*) are calculated (150) from the source image data (D-PIC) by means of previously calculated data of an illumination model (IMOD) which, for a calibration object having the geometrical parameters (GP), pass on the illumination acting on the first camera (LC) in the measuring space (MR), in order to recognize the optical item feature (L) and use the latter to detect and to classify the respective empty item (BC).

2. Method according to Claim 1, **characterized in that** the geometrical parameters (GP) specify the length, width, height of the empty item (BC) and/or its position in the measuring space (MR), and **in that** the illumination model (IMOD) includes illumination data (ID) which, in particular, are valid for a bright calibration object which has at least approximately the same length, width, height and/or position of the empty item (BC), in order to correct (150) influencing of the source image data (D-PIC) occurring from inhomogeneous illumination of the measuring space (MR) and/or reflection.

3. Method (100) according to Claim 1 or 2, **characterized in that** influencing, occurring from spatial distortion, of the source image data (D-PIC) is also corrected (140) by means of the geometrical parameters (GP).

4. Method (100) according to one of Claims 1 to 3, **characterized in that** influencing of the source image data (D-PIC) occurring from lens distortion of the camera optics is also corrected (140) by means of optical parameters for the first camera.

5. Method (100) according to Claims 3 and 4, **characterized in that** the distorting influencing of the source image data (D-PIC) is corrected (140) by means of optical parameters and the geometrical parameters (GP').

6. Method (100) according to one of the preceding claims, **characterized in that** influencing of the source image data (D-PIC) and/or of the corrected image data (D-PIC*) occurring from material fluctuations of a photosensitive semiconductor chip implemented in the first camera (LC) is also corrected (160) by means of a colour model.

7. Method (100) according to one of the preceding claims, **characterized in that** the source image data (D-PIC) of the optical item feature (L) are detected (110) by taking multiple recordings, in particular with different shutter times, by means of the first camera (LC) and subsequently combined (120) with one another, in order to create combined source image data (D-PIC') which have a higher image dynamics than the source image data (D-PIC).

8. Method according to Claim 7, **characterized in that** the multiple recordings are combined (120) with one another by a pixelwise superimposition.

9. Method according to one of the preceding claims, **characterized in that** the source image data (D-PIC) or the combined source image data (D-PIC') are subjected to black correction.

10. System (RS) for returning empties, having a measuring space (MR) for optically detecting and for classifying empty items (BC), constituting the subject matter, introduced into the measuring space (MR), in the form of boxes or cases with a flat logo surface, which respectively have at least one optical item feature (L) on the logo surface, wherein in the measuring space (MR):
- at least one first camera (LC) is arranged which detects source image data (D-PIC) of the optical item feature (L); and
- at least one optical sensor system is arranged, which includes at least two second cameras (C) and detects geometrical parameters (GP) of the empty item (BC),
**characterized in that** the system (RS) for returning empties has an arithmetic logic unit (PROC) which calculates corrected image data (D-PIC*) from the source image data (D-PIC) by means of previously calculated data of an illumination model (IMOD) which, for a calibration object having the geometrical parameters (GP), pass on the illumination acting on the first camera (LC) in the measuring space (MR), in order to recognize the optical item feature (L) and use the latter to detect and to classify the respective empty item (BC).

## Revendications

1. Procédé (100) destiné à la détection optique et à la classification d'objets consignés présentés (BC), sous la forme de caisses ou de boîtes comportant un plan pour logos plats, dans un système de retour d'articles consignés (RS), dans lequel l'objet consigné respectif (BC) comprend au moins un élément caractéristique optique d'objet (L) sur le plan pour logos et est introduit dans un espace de mesure (MR) du système de retour d'articles consignés (RS), dans lequel le procédé comprend les étapes suivantes :
- au moyen d'au moins une première caméra (LC), des données d'images de source (D-PIC) de l'élément caractéristique optique d'objet (L) sont détectés (110) ;
- au moyen d'au moins un système de capteur optique, qui comprend au moins deux deuxièmes caméras (C), des paramètres géométriques (GP) de l'objet consigné (BC) sont détectés (115),
**caractérisé en ce que** des données d'images corrigées (D-PIC*) sont calculées (150) à partir des données d'images de source (D-PIC) au moyen de données préalablement calculées d'un modèle d'éclairement (IMOD), lesquelles données restituent l'éclairement agissant dans l'espace de mesure (MR) sur la première caméra (LC) pour un objet d'étalonnage présentant les paramètres géométriques (GP), afin de reconnaître l'élément caractéristique optique d'objet (L) et de détecter et de classer sur la base de celui-ci l'objet consigné (BC) respectif.

2. Procédé selon la revendication 1, **caractérisé en ce que** les paramètres géométriques (GP) indiquent la longueur, la largeur, la hauteur de l'objet consigné (BC) et/ou sa position dans l'espace de mesure (MR) et **en ce que** le modèle d'éclairement (IMOD) comprend des données d'éclairement (ID) qui s'appliquent notamment à un objet d'étalonnage clair, qui présente au moins approximativement lesdites longueur, largeur, hauteur et/ou position de l'objet consigné (BC), afin de corriger (150) un éclairement irrégulier de l'espace de mesure (MR) et/ou un effet produit par réflexion des données d'images de source (D-PIC).

3. Procédé (100) selon la revendication 1 ou 2, **caractérisé en ce qu'**un effet des données d'images de source (D-PIC) se produisant du fait d'une distorsion spatiale est également corrigé (140) au moyen des paramètres géométriques (GP).

4. Procédé (100) selon l'une quelconque des revendications 1 à 3, **caractérisé en ce qu'**un effet des données d'images de source (D-PIC) se produisant du fait d'une distorsion de lentille de l'optique de caméra est également corrigé (140) au moyen de paramètres optiques pour la première caméra.

5. Procédé (100) selon les revendications 3 et 4, **caractérisé en ce que** l'effet de distorsion des données d'images de source (D-PIC) et corrigé (140) au moyen de paramètres optiques et des paramètres géométriques (GP').

6. Procédé (100) selon l'une quelconque des revendications précédentes, **caractérisé en ce qu'**un effet des données d'images de source (D-PIC) et/ou des données d'images corrigées (D-PIC*), se produisant du fait d'oscillations du matériau d'une puce à semiconducteur photosensible mise en oeuvre dans la première caméra (LC) est également corrigé (160) au moyen d'un modèle de couleur.

7. Procédé (100) selon l'une quelconque des revendications précédentes, **caractérisé en ce que** les données d'images de source (D-PIC) de l'élément caractéristique optique d'objet (L) sont détectées (110) en effectuant une pluralité d'acquisitions au moyen de la première caméra (LC), notamment avec des temps d'obturation différents, et en les combinant ensuite les unes aux autres (120) afin de créer des données d'images de source (D-PIC') qui présentent une dynamique d'image plus élevée que les données d'images de source (D-PIC).

8. Procédé selon la revendication 7, **caractérisé en ce que** la pluralité d'acquisitions sont combinées (120) en étant superposées les unes aux autres pixel par pixel.

9. Procédé selon l'une quelconque des revendications précédentes, **caractérisé en ce que** les données d'images de source (D-PIC) ou les données d'images de source combinées (D-PIC') sont soumises à une correction du noir.

10. Système de retour d'articles consignés (RS) comportant un espace de mesure (MR) destiné à détecter optiquement et à classer des objets consignés (BC) présentés qui sont introduits dans l'espace de mesure (MR), sous la forme de caisses ou de boîtes comportant un plan pour logos plat présentant respectivement au moins un élément caractéristique d'objet optique (L) sur le plan pour logos, dans lequel l'espace de mesure (MR) comportant :
- au moins une première caméra (LC) qui détecte des données d'images de source (D-PIC) de l'élément caractéristique optique d'objet (L) ;
- au moins un système de capteur optique qui comprend au moins deux deuxièmes caméras (C), détectant des paramètres géométriques (GP) de l'objet consigné (BC),
**caractérisé en ce que** le système de retour d'articles consignés (RS) comprend une unité de calcul (PROC) qui calcule des données d'images corrigées (D-PIC*) à partir des données d'images de source (D-PIC) au moyen de données préalablement calculées d'un modèle d'éclairement (IMOD), lesquelles données restituent l'éclairement agissant dans l'espace de mesure (MR) sur la première caméra (LC) pour un objet d'étalonnage présentant les paramètres géométriques (GP), afin de reconnaître l'élément caractéristique optique d'objet (L) et de détecter et de classer à partir de celui-ci l'objet consigné respectif (BC).
